# EUROPEAN PATENT SPECIFICATION

(11) **EP 1 447 865 B1**
(45) Date of publication and mention of the grant of the patent: **17.12.2008**
(21) Application number: 04394006.3
(22) Date of filing: 12.02.2004
(51) Int. Cl.: H01M 2/12, H01M 2/36

(54) **Improved single point watering apparatus for lead-acid battery**
Verbesserte Einpunkt-Bewässerungsvorrichtung für Bleisäurebatterien
Dispositif d'apport d'eau amélioré à point unique pour batterie au plomb.

(30) Priority: 14.02.2003 US 367630
(43) Date of publication of application: 18.08.2004
(73) Proprietor: Flow-Rite Controls, Inc., Grand Rapids, Michigan 49548 (US)
(72) Inventor: Campau, Daniel N., Ada, Michigan 49301 (US)
(74) Representative: Casey, Lindsay Joseph

(56) References cited:
- EP-A- 0 501 709
- GB-A- 2 016 798
- US-A1- 2001 031 390
- US-A1- 2002 088 488
- US-B1- 6 227 229

## Description

The present invention relates generally to single point watering (SPW) systems. More particularly, the invention relates to an improved SPW system specially adapted for use with a particular class or style of lead-acid battery known in the art as a "deep cycle" battery.

Deep cycle batteries, widely used in boats and RVs, are ideal candidates for SPW maintenance. These batteries are commonly used to provide boats and RVs with "house power" for various accessories, including trolling motors, pumps, lighting and instruments. Deep cycle batteries are special 6 cell (12 volt) monoblocs, based on flooded, lead-acid technology, distinct from gel cell or absorbed glass mat technologies. Many boaters and RV owners prefer the flooded cell batteries to the alternatives. They have lower initial cost; they produce more amp hours of energy per pound (kg); they use lower cost chargers; and they are more tolerant of overcharging. However, water is lost from the electrolyte in these batteries due to evaporation and electrolysis, and must be replaced periodically. As a result, a significant disadvantage of flooded cell batteries is that they require regular watering to maintain performance. This can be a significant problem. Batteries are frequently mounted in locations difficult to access, such as the bilge of a boat, or in small compartments that make it difficult to accurately add water manually. As a result, they often do not receive the regular watering they require, which can shorten batter life and weaken performance. If a practical SPW system were available for this class of batteries, it would prove valuable to a large number of boaters and RV owners.

Installing an SPW system on a deep cycle battery has heretofore been considered impractical. Cells are very closely spaced, and the battery cell vent openings are small in diameter, making individual SPW refill valves, designed for industrial use, too big and bulky to mount in deep cycle battery cells. With a cell spacing of 1 5/8 in. (41.275mm), there is not enough room to connect tubing to individual refill valves, even if they could fit into the small vent openings. In addition, multiple batteries are often used, with separate mounting arrangements and locations, making installation of an SPW system even more difficult, where control of water supply pressure, or residual water in the tubing could cause problems such as overfilling. A practical SPW system for this application would have to function reliably, independent of battery location and free of tightly controlled water supply pressure. Ideally, the vehicle operator could fill the batteries from a remote location, for example, in a boat while standing on the deck. The water should be supplied directly from a portable bottle of distilled water, or an easily accessed container of distilled water stored on the vehicle. Users will have a choice of water supply systems, such as a gravity fill or a small hand pump for a direct fill from a distilled water container, or a built-in electric pump, such as an inexpensive centrifugal pump, to provide push button battery watering.

What is needed, therefore, is an SPW system adapted particularly for use with the marine deep cycle class of lead-acid batteries.

According to an aspect of the present invention, there is provided a single point watering system for use with a lead-acid battery as specified in claim 1. The invention is also directed to a method by which the described apparatus operates and including method steps for carrying out every function of the apparatus.

The present invention is directed to a single point watering system for use with a lead-acid battery having a plurality of battery cell access ports. The system comprises a plurality of refill valves and a plurality of refill valves and a manifold having (i) a water feed tube with at least one external port and a plurality of outlets each communicating with one of the plurality of refill valves, and (ii) at least one passageway housing a flame arrestor to permit the discharge of gases from the battery cells to the surrounding environment only through the flame arrestor. The manifold is removably and sealably mountable to the battery so that each refill valve is in fluid communication with one of the battery cell access ports.

The invention will be understood in greater detail from a description of preferred embodiments thereof given by way of example only and with reference to the accompanying drawings in which: -
FIGURE 1 is a cross-sectional view of a general embodiment of a known valve assembly;
FIGURE 2 is a cross-sectional view like that of FIG. 1, but showing the valve assembly in the closed condition;
FIGURES 3 and 4 are cross-sectional views of one embodiment of a known valve assembly useful in SPW systems for filling batteries;
FIGURE 5 is a top perspective view showing an array of deep cycle batteries having an SPW system installation in accordance with the present invention;
FIGURE 6 is a perspective view of one preferred embodiment showing refill valves assembled with a manifold useful in the practice of the present invention;
FIGURE 7 is an exploded perspective view of the valve and manifold assembly of FIGURE 6;
FIGURES 8 and 9 are cross-sectional views of the cover and base, respectively, of the manifold made in accordance with a preferred embodiment of the present invention;
FIGURES 10 and 11 are cross-sectional views showing further details of the valve and manifold assembly as installed on a marine deep cycle battery at the beginning and end of the watering cycle; and
FIGURE 12 is an enlarged and exploded side view, in partial cross section, showing use of a special adaption in accordance with a preferred embodiment of the invention.

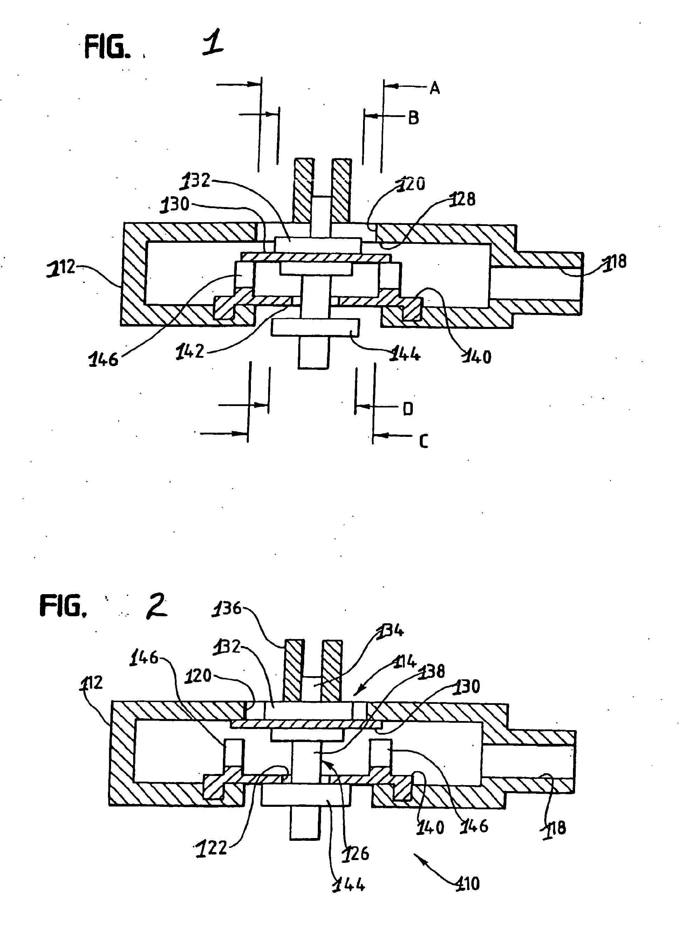

The battery refill valve disclosed in United States Patent No. US-A-6 227 229 (EP-A-1 124 084) (Campau) can be modified to provide a practical marine deep cycle battery SPW system. More particularly, Campau discloses, with respect to Figures 1-4, and in particular to Figure 1, a valve assembly designated generally as 110 and includes a body portion 112, having two opposing valves 114 and 116. Reference is made to the individual valves in the assembly as "upper" and "lower" as they are illustrated in the vertical, stacked configuration, which is the orientation suitable for use in a float or displacer actuated valve. However, the valve assembly may be oriented in any other position, where a displacement of the central valve support is generated by other inputs such as pressures, forces, electrical signals, etc. not dependent on gravity, as in liquid displacement.

The valve assembly includes a body 112 with at least one inlet 118 and two outlet ports 120 and 122. The outlets are aligned, preferably concentric, and located on opposing faces of the body. Valve action is controlled by a small movement of a centrally located valve support assembly 126. The upper port 120 is formed in the body and is effectively rigid. This port forms the upper valve seat 128. If desired, the upper valve seat could have some resiliency, such as provided by an o-ring. The valve support assembly includes a flexible upper valve member 130. The flexible upper valve member may be in the form of a diaphragm, held in position on the valve support assembly by a retainer 132. The flexible upper valve member is positioned inside the valve body, adjacent and concentric with the upper valve seat 128. The retainer 132 has a projection 134 extending through the upper valve port to provide a means for guiding the movement of the valve support assembly. Structure downstream of the upper valve port forms a guide 136 which works in a loose fitting relationship with the retainer projection to keep the diaphragm 130 and upper valve seat 128 in a generally concentric relationship.

The valve support assembly 126 includes a stem 138 which has the diaphragm and retainer mounted at one end. The other end of the stem projects through the lower valve port 122. The lower valve port is formed by a flexible member 140 mounted to the lower opening in the body, forming a flexible lower valve seat 142. The flexible lower valve member 140 is mounted in sealing relationship with the body 112. A central hole in the flexible lower valve member 140 forms the lower valve outlet port 122. The stem passes freely through it. Integrally formed on the stem 138 and having a larger diameter than the stem and the lower valve seat, is a rigid lower valve member 144 concentric with the stem and with the lower valve outlet port. This valve member 144 is located on the stem outside of the valve body 112. The sealing face of this valve member is located adjacent to the flexible lower valve seat. Both the upper and lower valve members are equally spaced from their respective seats, defining the stroke or travel of the valve support assembly between open and closed positions.
When the valve support assembly 126 is in its lower open position, the diaphragm 130 rests on stops 146, which are most conveniently formed in the flexible lower valve member 140. These stops 146 are local bosses of sufficient height so that fluid inside the body can freely flow between the bosses to communicate with both sides of the diaphragm 130 and with the lower valve outlet, valve and valve seat. In this way the fluid pressure acts on both sides of the diaphragm, maintaining nearly a balance of forces so the valve assembly 110 remains in a stable operating position over a wide range of operating pressures. Importantly, only a small force is required on the valve support assembly 126 to move it from its open position to its closed position.

For purposes of describing the operation of the valve, it is necessary to define the conditions downstream of the valve. For the applications described above, the valve can be considered to be at atmospheric pressure immediately downstream of both of the valve outlets. Therefore, if the upper valve 114 has a larger effective area than the lower valve 116, there will be a net upward force established as the valve begins to close. This is because as the valve closes a pressure differential develops across the diaphragm forcing it against the upper valve seat. Since the diaphragm is flexible, and the effective upper valve area is larger than the effective area of the lower valve, the valve support assembly moves into a closed position and flexes upward until a balancing force develops at the lower valve. This balancing force is developed by contact between the flexible lower seat 142 and the rigid lower valve member 144. This contact also forms a seal at the lower valve outlet port 122. Therefore, both upper and lower valves close in response to a small upward force applied to the valve support assembly. In many applications it is also desirable to have a small travel or stroke between open and closed positions. This is accomplished by having outlet areas large relative to inlet area. With just a small movement, the valve can move from a fully open condition where there is little pressure differential across the diaphragm, to a closing condition where a pressure differential starts to develop across the diaphragm. This has the advantage in liquid level applications in that a more accurate level shut-off point can be maintained with a small displacement float.

This valve design has the further advantage in that it can maintain nearly constant actuator closing force over a wide operating pressure range. This is due to the balanced valve design in which the force tending to lift the upper valve into a closed position is opposed by the force on the lower valve tending to hold the valve open. Just enough valve area differential is provided to give the valve a closing bias, without the risk of a premature shut-off occurring at high operating pressure and without the common characteristic that other float valves have in which there is a significant liquid level shut-off point differential between high and low operating pressures.

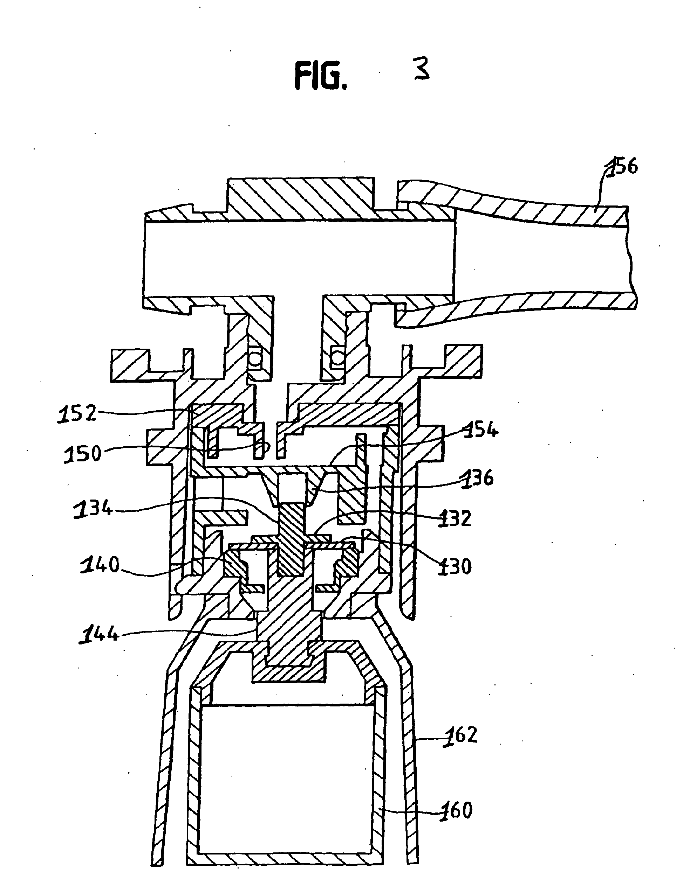

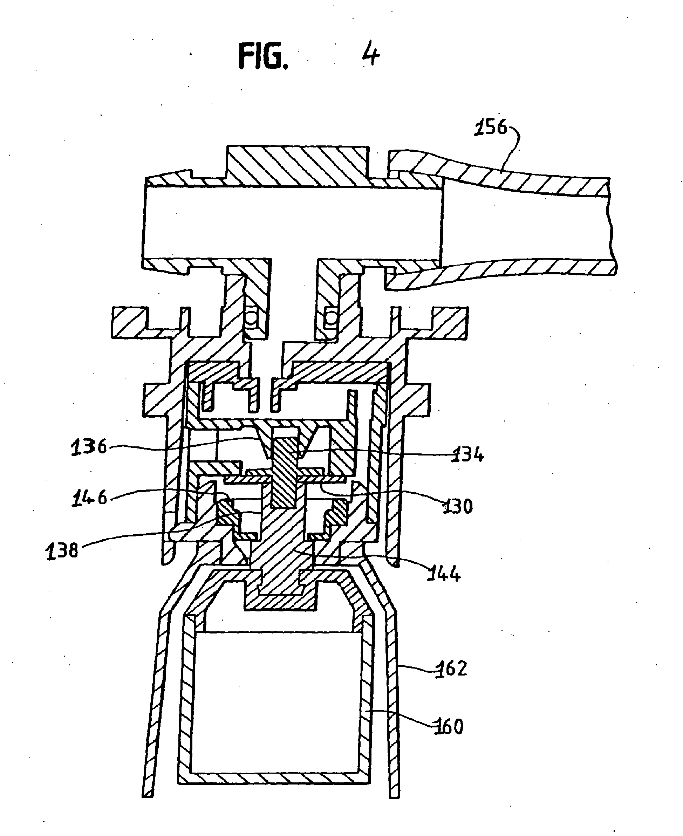

The operation of the valve assembly is further explained with reference to one embodiment found to be particularly useful in a SPW system for filling battery cells. This embodiment is illustrated in FIGURES 3 and 4. FIGURE 3 shows the valve in an open position as occurs when electrolyte level is below the displacer reset position and before water is supplied to the inlet connector. Reset of the valve from a closed to an open position occurs when the displacer assembly, including upper and lower valve members, has dropped down about 0.08 inches (2 mm) from its uppermost position. Having the upper valve rest on the flexible lower member 140 provides a stop. Some refill water from a previous cycle is trapped by having the end of the inlet port 150 in the top plate 152 extend below the upper rim of water trap reservoir 154. This water trap blocks the gas path between the water feed tubing 156 and the battery cell. The purpose of this water trap is to prevent the propagation of a flame from the cell into the tubing and then into neighboring cells. Battery cell gas is very flammable hydrogen gas, which evolves during normal battery charge and discharge cycling. Ignition can occur due to operator error such as smoking near the battery or using torches nearby. In these situations violent cell explosions can occur. To minimize the hazard it is important that the SPW system not allow a flame to enter the tubing, where it could cause a chain reaction involving additional cells. Tests have been conducted which verify the flame arresting ability of this design.
The displacer 160 is directly connected to the stem 138 of the valve support assembly. When electrolyte level is low, the displacer rests in its reset position, which opens both upper and lower valves. In this orientation, water is free to flow through both upper and lower valve ports. The forces on the valve support assembly are low so that the weight of the displacer is sufficient to hold the valve open over the full range of operating pressures, typically limited to 140 psi (275.79 kPa) or below. The valve may be designed for higher pressure, but SPW systems limit maximum pressure to prevent overstressing the interconnecting tubing 156.
An important feature of this design is that a relatively small displacement float 160 can be used compared to other SPW float valves. This is because of the balanced valve design in which the force on the upper valve 114 acting to close the valve is reduced by the force on the lower valve 16 acting to keep the valve open. There is less net force required to hold the valve open, so the weight of the displacer can be less than in other float valves.
The smaller displacer allows the use of a skirt 162 to protect the displacer. Other float valves use floats too large in diameter to allow the addition of a skirt. The valve would not fit through a standard bayonet style vent port, of the type widely used on industrial batteries. The skirt 162 surrounds the displacer 160 helping to shield it from floating debris. Portions of the skirt 162 extend down to at least the lowest level attained by the displacer when in the reset position.
It is common in industrial batteries for a panel, called a moss shield, to be placed over the plates, typically about one-half inch (12.7mm) or so below the electrolyte level. This panel is anchored but frequently bows upward or rides upward after a time. The skirt prevents the moss shield from pushing the displacer upward, whichmight close the valve and cause permanent cell damage.

As illustrated in FIGURE 3, when the electrolyte level rises sufficiently to lift the displacer 160, the upper and lower valves, 130 and 144, are pressed against their respective seats, 128 and 142, by the pressure of the supply line, blocking further flow into the cell. In the SPW application, the valve is not designed to reopen once it has closed and supply pressure remains on. Reset to the ready position occurs only after supply pressure has been relieved. This pressure relief can be provided by a separate valve system on the water supply line, or the refill valves themselves can be designed to allow a small seepage that will slowly relieve line pressure after the water supply has been disconnected from the battery SPW system. In this way, the valves are reset into the ready state for the next watering cycle.

The valve controls the flow of water into a battery cell by means of a displacer responsive to liquid level in the cell. The valve is unique in the SPW field in that it is sensitive to a very small displacement force over a wide range of operating water supply pressures. This enables the valve to be controlled by a small displacer which can fit into the small vent opening common to the marine deep cycle battery, and still allow a wide range of water supply pressures to be used. A wide range of input water operating pressure is important to provide a wide range of water supply options.

The term "deep cycle battery" as used herein refers to a special configuration of monobloc battery. They are 12 volt (six cell) monobloc batteries that are within the standard battery size designations: Group 24, Group 27 and Group 31. These batteries have certain similarities in the size and location of their cell vent port openings. Batteries in each of the Groups 24, 27 and 31 all have cell vent port openings of a nominal 3/4 inch (19.05mm) diameter. Also, the six openings in each battery share a common centerline and are grouped into two subsets of three cells each. The openings within the gangs of three are spaced a nominal 1 5/8 inch (41.275mm) apart. The two subsets are spaced differently between the Group 24, 27 and 31 size batteries. Typically, in deep cycle batteries, each cell vent port opening is designed to receive a venting cap which press fits into the opening. Normally these caps are ganged together in a single integral structure of three. The closure assembly includes a common passageway for cell gases to vent to atmosphere. Each battery has two closure/vent assemblies, each one press fit into three cell openings. The closures are spaced together most closely on the Group 24 size batteries and farthest apart on the Group 31 size batteries.

As described below in accordance with the preferred embodiment, three automatic shut-off refill valves are housed in a structure which replaces the normal closure used on Group 24, 27 and 31 batteries. Two manifolds per battery are therefore required. They are joined together on each battery by a short section of tubing of length appropriate for the particular Group.

In the preferred embodiments described below, the normal cap or closure assembly is replaced by a valve-manifold assembly. The manifold sits above the battery cover with the valve body of each refill valve housed within. The manifold must provide a path for water to flow into the cell during the refill cycle and for the gases to leave the cells and vent to atmosphere whenever the gas pressure exceeds ambient (atmospheric pressure). The manifold must also seal the cell opening so that electrolyte does not leak onto the battery top due to tilting and sloshing. The manifold must also allow the valve displacer to communicate with the electrolyte and the valve to control the electrolyte level. The manifold therefore includes three bosses which extend from the bottom of the manifold to press fit into the cell vent port openings to provide and maintain a tight seal and attachment under normal shock, vibration and handling loads. Each boss on the manifold has an inside diameter sufficient to allow a displacer to communicate with the valve body in the manifold and the electrolyte within the cell, as well as space for water to flow into the cell and gasses to flow from the cell into the manifold.

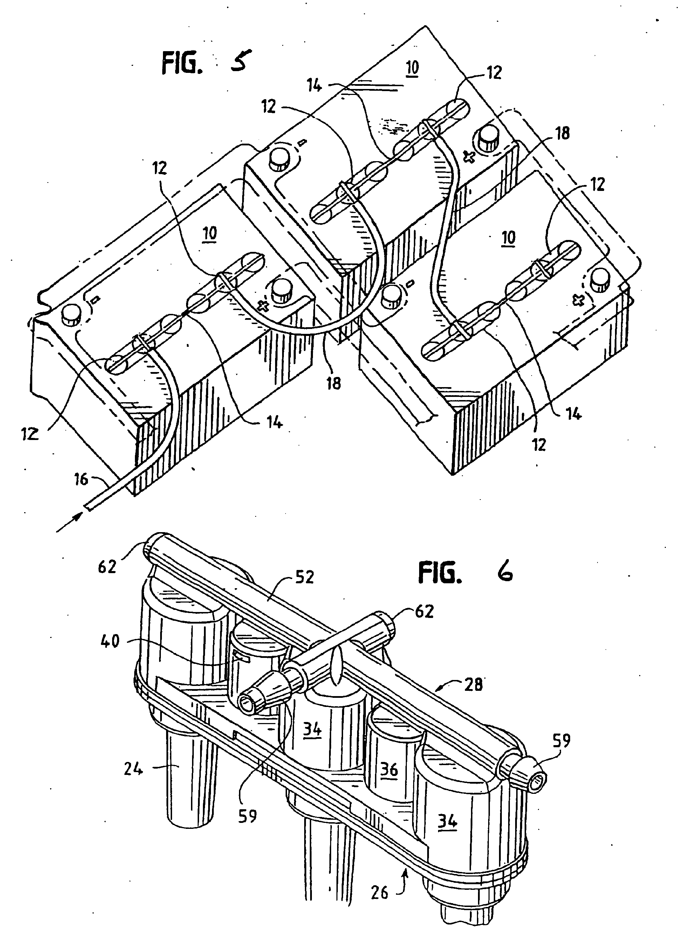

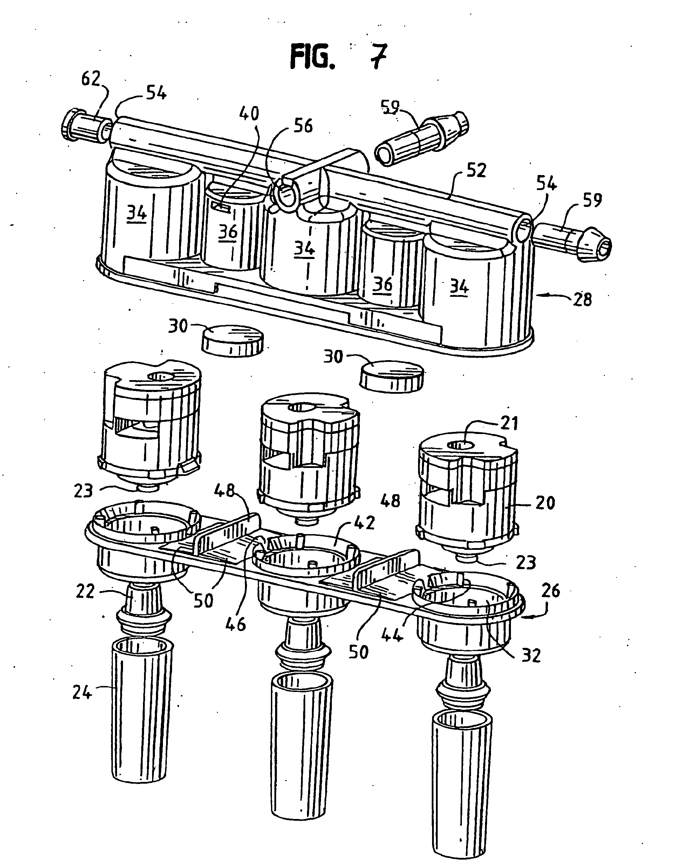

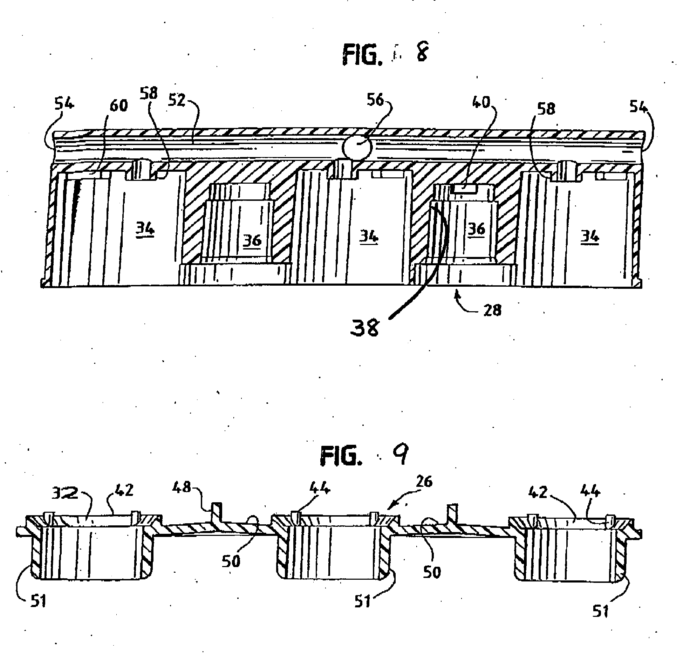

FIGURE 5 illustrates an array of three deep cycle batteries 10, each having six battery cell access ports arranged linearly across the top of the battery. This set of six ports is, as described above, two subsets of three ports arranged end to end. While the spacing between the access ports in the subsets is uniform throughout the marine deep cycle battery class (at 1 5/8 in. (41.275mm)), the spacing between the two port subsets may vary (typically from 1 5/8 in. to 2 7/8 in. (41.275mm to 73.05mm)). As a result, each battery 10 is provided with two separate valve-manifold assemblies 12, which are joined by infra battery connecting tubes 14. The SPW system also includes a water supply tube 16 and inter battery connecting tubes 18. Further, structural details of the valve-manifold assembly 12 are illustrated in FIGURES 6-9. The valve includes a valve body or cartridge 20 with an inlet 21 and valve stem 23, and an actuator comprising displacer top 22 and displacer bottom 24. The manifold includes a base 26 and cover 28. A pair of flame arrestors 30, in the form of porous plastic disks, are also part of the assembly.

The details of valve cartridge 20 and displacer 22, 24 are more fully disclosed in U.S. Patent No. 6,227,229. (See, for example, Figures 3 and 4) The individual valve cartridges 20 each are positional in an enclosure in the manifold defined by cartridge well 32 in the base 26 and a cartridge canister 34 in the cover 28. The flame arrestors 30 are press fit into passageways or arrestor receptacles 36 where they abut shoulder 38 at a level just below gas vent ports 40. The manifold base 26 is provided with upstanding annular flanges 42, each of which defines an individual valve cartridge well 32. A plurality of spacers or small pins 44 are formed in the base 26, preferably along the inside perimeter of flanges 42, and a plurality of openings or slots 46 are formed in flanges 42, as well. The pins 44 support the cartridges 20 in spaced relation from base 26 so that, in combination with slots 46, passageways are provided for the flow of water from the refill valves into the battery cells and the flow of gases from the battery cells into receptacles 36. The gases collecting in receptacles 36 then pass through the flame arrestors 30 and out of the manifold through vent ports 40.

Base 26 is also provided with baffles 48 and sloping surfaces 50. Thus, any water from a valve cartridge 20 or electrolyte from the battery cell that finds its way into gas receptacles 36 is easily redirected back into the battery cells.

Finally, base 26 is also provided with a plurality of manifold skirts or bosses 51 which are sized and positioned for press fit insertion into the battery cell access ports. In this manner, the valve-manifold assembly is sealably mounted to the battery with each of the refill valves' displacers positioned within one of the battery cells. Water is, therefore, delivered to the battery cells via the valve-manifold assemblies 12 and gases developing in and/or displaced from the cells are discharged to the surrounding environment through the valve-manifold assemblies 12, as well. Manifold cover 28 includes a longitudinally extending water feed tube 52 having four external ports, preferably two end ports 54 and two intermediate ports 56.
Bosses 58 extend from feed tube 52 into each valve cartridge canister 34 forming internal ports 58 for the delivery of water to each valve cartridge 20. The internal size and configuration of the cartridge canisters 34 together with the bosses 58 are adapted to receive the individual valve cartridges 20 in press fit relationship to form a leak tight seal at the cartridge inlet 21. The manifold cover 28 also preferably includes one or more projecting keys 60 which assure the proper orientation of the valve cartridges 20 in canisters 34.

After the valve cartridges 20 and flame arrestors 30 are properly positioned within manifold cover 28, the base 26 is ultrasonically welded or otherwise joined in a leak tight manner to the cover, and the displacer top 22 and bottom 24 are snap fit onto the valve cartridge stem 23. At this point, the valve-manifold assembly is complete and it may be easily mounted to the top of a deep cycle battery 10.

To finish the SPW system installation, the remaining access ports on the battery 10, and on any other batteries in the array, are also fitted with a valve-manifold assembly 12, and intra battery tubes 14 and inter battery tubes 18, along with a water supply tube 16 are fitted onto the various external ports 54 and 56, as needed. All unused external ports are fitted with plugs 62, and the entire SPW installation is complete. By using single barb connectors, as illustrated, and using flexible 1/4 in. (6.35mm) I.D. PVC tubing, the connections are effected simply by sliding the end of the tubes over the barb connectors, and no clamps or wire ties are required. This, too, simplifies the installation and reduces the entire associated costs.

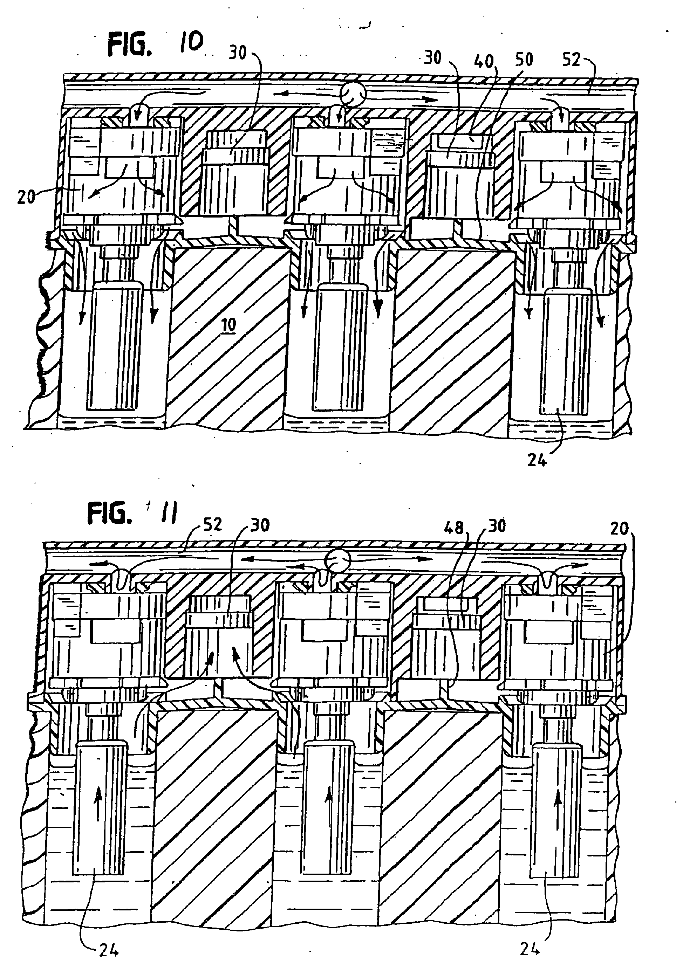

As illustrated in FIGURES 10 and 11, during the water filling cycle the displacers 24 are low and water from the feed tube 52, passes through valve cartridge 20 and into the battery cell. At the same time, gases displaced from the cells enter gas receptacles 36 and pass out of the manifold through arrestors 30 and vent ports 40. When the displacers rise, the refill valves automatically close as the electrolyte level in each cell reaches the predetermined set point.

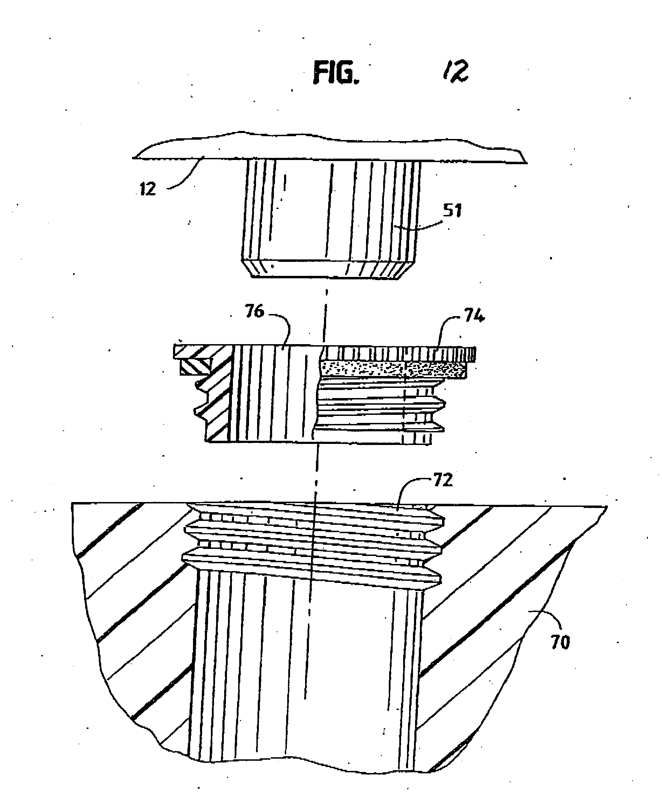

FIGURE 12 illustrates one other version of deep cycle battery 70 having a threaded vent port opening 72. When used with this form of deep cycle battery an externally threaded adaptor 74 is first assembled to the vent port opening. Adaptor 74 has a smooth cylindrical internal surface 76 which cooperates with the manifold skirt 51 to provide a press fit, leak tight seal between the manifold assembly 12 and the battery.

It will be appreciated by those skilled in the art that various changes and modifications can be made to the illustrated embodiments without departing from the scope of the present invention.

## Claims

1. A single point watering system for use with a lead-acid battery having a plurality of battery cell access ports, the system comprising:
a plurality of refill valves;
a manifold having (i) a water feed tube (52) with at least one external port (54) and a plurality of outlets each communicating with one of the plurality of refill valves, and (ii) at least one passageway housing a flame arrestor (30) to permit the discharge of gases from the battery cells to the surrounding environment only through the flame arrestor (30); and
said manifold being removably and sealably mountable to said battery so that each refill valve is in fluid communication with one of the battery cell access ports.

2. A system as claimed in claim 1 wherein said feed tube (52) has opposing ends with one external port (54) located at one end and two external ports (56) located intermediate said ends.

3. A system as claimed in claim 1 or claim 2 wherein each of said refill valves includes a valve body and an actuator, the valve body of each valve being housed within the manifold and the actuator of each valve extending from the manifold into one of said battery cell access ports.

4. A system as claimed in claim 1 wherein said water feed tube (52) has an external port (54) at each of its ends and two external ports (56) intermediate its ends.

5. A system as claimed in any of claims 1-4
wherein two manifolds are sealably mounted to said battery and are connected so that the feed tube (52) of each manifold is in fluid communication with the other.

6. A system as claimed in any of claims 1-5
wherein said manifold comprises a base (26) and a cover (28) which are sealably joined and cooperate to form enclosures for each valve body, and the gas discharge passageway is located between adjacent enclosures.

7. A system as claimed in claim 6 wherein the base (26) includes a baffle (48) positioned between adjacent enclosures to substantially isolate the water and electrolyte for one cell from that of an adjacent cell.

8. A system as claimed in claim 7 wherein said manifold base includes sloping surfaces (50) to direct water and electrolyte from the gas discharge passageway into the battery cells.

9. A system as claimed in any of claims 1-8
wherein said lead-acid battery is a marine deep cycle battery.

10. A system as claimed in any of claims 1-9
wherein the battery has threaded access ports and said system further comprises an externally threaded adaptor (74) which mates with the battery access port and cooperates with said manifold to removably and sealably mount the manifold to the battery.

## Patentansprüche

1. Einpunkt-Bewässerungssystem für die Verwendung mit einer Bleibatterie mit einer Vielzahl von Batteriezellen-Zugangsöffnungen, wobei das System Folgendes umfasst:
eine Vielzahl von Nachfüllventilen;
einen Verteiler mit (i) einer Wasserzufuhrröhre (52) mit mindestens einer externen Öffnung (54) und einer Vielzahl von Auslässen, die jeweils mit einem der Vielzahl von Nachfüllventilen in Verbindung stehen, und (ii) mindestens einem Durchgang, in dem eine Flammensicherung (30) untergebracht ist, um das Auslassen von Gasen von den Batteriezellen an die umgebende Umgebung nur durch die Flammensicherung (30) zuzulassen; und
wobei der genannte Verteiler entfernbar und abdichtbar an der genannten Batterie anbringbar ist, so dass die Nachfüllventile jeweils mit einer der Batteriezellen-Zugangsöffnungen in Flüssigkeitsverbindung stehen.

2. System nach Anspruch 1, wobei die genannte Zufuhrröhre (52) einander gegenüber liegende Enden hat, wobei sich eine externe Öffnung (54) an einem Ende befindet und sich zwei externe Öffnungen (56) zwischen den genannten Enden befinden.

3. System nach Anspruch 1 oder Anspruch 2, wobei die genannten Nachfüllventile jeweils einen Ventilkörper und eine Betätigungsvorrichtung umfassen, wobei der Ventilkörper der Ventile jeweils in dem Verteiler untergebracht ist und sich die Betätigungsvorrichtung der Ventile jeweils vom Verteiler in eine der genannten Batteriezellen-Zugangsöffnungen erstreckt.

4. System nach Anspruch 1, wobei die genannte Wasserzufuhrröhre (52) eine externe Öffnung (54) an jedem ihrer Enden und zwei externe Öffnungen (56) zwischen ihren Enden hat.

5. System nach einem der Ansprüche 1-4, wobei zwei Verteiler abdichtbar an der genannten Batterie angebracht sind und verbunden sind, so dass die Zufuhrröhre (52) jedes Verteilers mit der jeweils anderen in Flüssigkeitsverbindung steht.

6. System nach einem der Ansprüche 1-5, wobei der genannte Verteiler eine Basis (26) und eine Abdeckung (28) umfasst, die abdichtbar miteinander verbunden sind und zusammenwirken, um Gehäuse für jeden Ventilkörper zu bilden und wobei sich der Gasauslassdurchgang zwischen benachbarten Gehäusen befindet.

7. System nach Anspruch 6, wobei die Basis (26) einen zwischen benachbarten Gehäusen positionierten Einbau (48) umfasst, um im Wesentlichen das Wasser und den Elektrolyt für eine Zelle von denen einer benachbarten Zelle abzutrennen.

8. System nach Anspruch 7, wobei die genannte Verteilerbasis schräge Oberflächen (50) umfasst, um Wasser und Elektrolyt von dem Gasauslassdurchgang in die Batteriezellen zu leiten.

9. System nach einem der Ansprüche 1-8, wobei es sich bei der genannten Bleibatterie um eine Tiefentladungs-Schiffsbatterie handelt.

10. System nach einem der Ansprüche 1-9, wobei die Batterie Zugangsöffnungen mit Gewinde hat und das System weiter einen Adapter (74) mit Außengewinde umfasst, der mit der Batteriezugangsöffnung zusammenpasst und mit dem genannten Verteiler zusammenwirkt, um den Verteiler entfernbar und abdichtbar an der Batterie anzubringen.

## Revendications

1. Système d'apport d'eau à point unique destiné à être utilisé avec une batterie plomb-acide ayant une pluralité d'orifices d'accès aux cellules de batterie, le système comprenant :
une pluralité de vannes de remplissage ;
un collecteur ayant (i) une tubulure d'alimentation en eau (52) avec au moins un orifice externe (54) et une pluralité de sorties communiquant chacune avec l'une de la pluralité de vannes de remplissage, et (ii) au moins un passage abritant un pare-flammes (30) afin de permettre la décharge de gaz depuis les cellules de batterie dans l'environnement avoisinant uniquement par le biais du pare-flammes (30) ; et
ledit collecteur pouvant être monté de façon amovible et étanche sur ladite batterie de telle sorte que chaque vanne de remplissage soit en communication fluidique avec l'un des orifices d'accès aux cellules de batterie.

2. Système selon la revendication 1, dans lequel ladite tubulure d'alimentation (52) comporte des extrémités opposées avec un orifice externe (54) situé à une extrémité et deux orifices externes (56) situés entre lesdites extrémités.

3. Système selon la revendication 1 ou la revendication 2, dans lequel chacune des vannes de remplissage comporte un corps de vanne et un actionneur, le corps de vanne de chaque vanne étant abrité à l'intérieur du collecteur et l'actionneur de chaque vanne s'étendant depuis le collecteur jusque dans l'un desdits orifices d'accès aux cellules de batterie.

4. Système selon la revendication 1, dans lequel ladite tubulure d'alimentation en eau (52) comporte un orifice externe (54) à chacune de ses extrémités et deux orifices externes (56) entre ses extrémités.

5. Système selon l'une quelconque des revendications 1 à 4, dans lequel deux collecteurs sont montés de façon étanche sur ladite batterie et sont connectés de telle sorte que la tubulure d'alimentation (52) de chaque collecteur soit en communication fluidique avec l'autre.

6. Système selon l'une quelconque des revendications 1 à 5, dans lequel ledit collecteur comprend une base (26) et un couvercle (28) qui sont joints de façon étanche et coopèrent pour former des enceintes pour chaque corps de vanne, et le passage de décharge de gaz est situé entre des enceintes adjacentes.

7. Système selon la revendication 6, dans lequel la base (26) comporte une chicane (48) positionnée entre des enceintes adjacentes afin de sensiblement isoler l'eau et l'électrolyte d'une cellule de ceux d'une cellule adjacente.

8. Système selon la revendication 7, dans lequel ladite base de collecteur comporte des surfaces inclinées (50) afin de diriger l'eau et l'électrolyte depuis le passage de décharge de gaz jusque dans les cellules de batterie.

9. Système selon l'une quelconque des revendications 1 à 8, dans lequel ladite batterie plomb-acide est une batterie marine à décharge poussée.

10. Système selon l'une quelconque des revendications 1 à 9, dans lequel la batterie a des orifices d'accès filetés et ledit système comprend en outre un adaptateur fileté extérieurement (74) qui s'adapte à l'orifice d'accès de la batterie et coopère avec ledit collecteur pour monter de façon amovible et étanche le collecteur sur la batterie.
